# EUROPEAN PATENT SPECIFICATION

(11) **EP 2 877 499 B1**
(45) Date of publication and mention of the grant of the patent: **21.10.2015**
(21) Application number: 13795523.3
(22) Date of filing: 27.11.2013
(51) Int. Cl.: C08F 2/01, C08F 2/34

(54) **DEVICE AND METHOD FOR QUANTIFICATION OF POLYMERISATION REACTION**
VORRICHTUNG UND VERFAHREN ZUM QUANTIFIZIEREN EINER POLYMERISATIONSREAKTION
DISPOSITIF ET PROCÉDÉ POUR LA QUANTIFICATION D'UNE RÉACTION DE POLYMÉRISATION

(30) Priority: 27.11.2012 EP 12290411; 17.07.2013 EP 13290167
(43) Date of publication of application: 03.06.2015
(73) Proprietor: Total Research & Technology Feluy, 7181 Seneffe (BE); Centre National de la Recherche Scientifique (CNRS), 75016 Paris (FR)
(72) Inventor: LAVASTRE, Olivier, F-35490 Gahard (FR); DARSY, Guillaume, F-87000 Limoges (FR)
(74) Representative: Leyder, Francis
(86) International application number: PCT/EP2013/074822
(87) International publication number: WO 2014/083037

(56) References cited:
- WO-A2-02/16019

## Description

### FIELD OF THE INVENTION

The present invention is in the field of quantification of a polymerisation reaction, more preferably a device and method for high-throughput quantification of a polymerisation reaction.

### BACKGROUND OF THE INVENTION

Polymers such as polyethylene (PE) are synthesized by polymerizing ethylene (CH₂=CH₂) monomers. Because it is cheap, safe, stable to most environments and easily processed polyethylene polymers are useful in many applications. Polyethylene can be classified into several types, such as but not limited to LDPE (Low Density Polyethylene), MDPE (Medium Density Polyethylene), HDPE (High Density Polyethylene) and LLDPE (Linear Low Density Polyethylene) as well as High Molecular Weight (HMW), Medium Molecular Weight (MMW) and Low Molecular Weight (LMW). Each type of polyethylene has different properties and characteristics.

Polymers may be formed under slurry conditions with the produced polymer usually in the form of solid particles suspended in diluent. Slurry conditions typically found in a loop reactor where the slurry is circulated continuously to maintain efficient suspension of the polymer product and the liquid diluent.

Alternatively, polymers may be formed in the gas phase by feeding into a gas phase reactor gaseous monomer and polymerization catalyst. The types of polymeric product and efficiency of the reaction are to some extent dependent on the catalyst and catalyst concentration. A problem with evaluating catalysts is the need to perform each polymerization reaction in a separate gas phase reactor, and then subsequently to quantify the product. When there is a plurality of catalysts, optimization of conditions becomes limited by the number of reactors available that will allow polymerization simultaneously under identical conditions. Consequently, there is a need in the art for new system that allows polymerization under identical conditions from one or more catalysts, and more in particular, an accurate screening system.

Document WO 02/16019 discloses a polymerization process in which filling of the reactor is measured with a detector using ionizing. The detector can be fixed but also flexible, attached on a movable arm.

### SUMMARY OF THE INVENTION

The inventors have now found that these needs can be met either individually or in any combination by the method of the present invention.

The present invention relates to a method for quantifying the product of one or more catalysed gas-phase polymerisation reaction comprising:
- performing the one or more polymerisation reactions on one or more sub-regions of a reaction surface to obtain one or more polymerisation reaction product piles,
- obtaining one or more distance measurements related to the heights of the one or more reaction product piles, and
- determining, from the one or more distance measurements, quantification of the one or more reaction products. Preferably the reaction surface is part of a reaction support member. It is understood that one or more polymerisation reaction product piles is each disposed on the reaction surface (20).

The present invention also relates to a device for quantifying a product of one or more catalysed gas-phase polymerisation reaction comprising:
- a reaction support member comprising a reaction surface having one or more sub-regions for receiving the one or more polymerisation reactions and one or more reaction product piles therefrom, wherein the reaction support member is detachable from the device and configured for removable insertion into a gas-phase polymerisation reaction, and
- a distance measurement system configured to measure one or more distances related to the heights of the one or more reaction product piles.

Prior to obtaining the one or more distance measurements, the reaction support member may be removed from a gas-phase polymerisation reactor in which the one or more catalysed gas-phase polymerisation reaction is performed. The performing of the one or more polymerisation reactions on one or more sub-regions of a reaction surface of a reaction support member to obtain one or more polymerisation reaction product piles may comprise the steps: dispensing one or more polymerisation catalysts onto the one or more sub-regions of the reaction surface of the reaction support member; placing the reaction support member into a gas-phase polymerisation reactor; performing the gas-phase catalysed polymerisation reaction, to form the one or more polymerisation reaction product piles on the reaction surface of the reaction support member; and removing the reaction support member from the gas-phase polymerisation reactor, thereby providing one or more polymerisation reaction product piles on one or more sub-regions of the reaction surface of the reaction support member.

The one or more distance measurements may be performed using one or more detectors that is/are an ultrasonic range finder, an infrared range finder, a laser range finder, a laser scanner, a camera, a force sensor, a multiplicity of one of these, or a combination of one or more of these. The distance measurement system may comprise one or more detectors that is/are an ultrasonic range finder, an infrared range finder, a laser range finder, a laser scanner, a camera, a force sensor, a multiplicity of one of these, or a combination of one or more of these. The one or more detectors may be provided on a detector-supporting surface, DSS, arranged parallel to and overlapping with the reaction surface. The one or more sub-regions and one or more detectors may be in mutual spatial alignment for the measurement of the one or more distances related to the heights of the one or more reaction product piles.

The distance measurement system may comprise:
- one or more force-sensors disposed on the DSS that is arranged parallel to and overlapping with the reaction surface, and
- a distance indicator configured to measure a change of distance between the DSS and the reaction surface,
- the distance between the DSS and reaction surface is controllably adjustable, and

The DSS or the reaction surface, or both may be displaceable, and displacement may be essentially linear and essentially perpendicular to the reaction surface. The distance between the DSS and reaction surface may be controllably adjustable using an adjustable spacer comprising a threaded screw, or a rack-and-pinion assembly. The adjustable spacer may be configured to displace gradually the force sensor towards the sub-region, or to gradually displace the sub-region towards the force sensor. The adjustable spacer may be configured to position the force sensor in a starting position clear of the reaction product. The minimum range of movement adjustable by the adjustable spacer may be greater than the height of the reaction product. The reaction surface may be dismountable from the device. The reaction surface and DSS may be essentially rigid.

A plurality of catalysed gas-phase polymerisation reactions may be quantified. Where a plurality of catalysed gas-phase polymerisation reactions is quantified, the method may comprise the steps:- performing the plurality of polymerisation reactions each on a plurality sub-regions of a reaction surface of a reaction support member to obtain a plurality of polymerisation reaction product piles disposed on the reaction surface; obtaining a plurality of measurements each related to the heights of the plurality of reaction product piles; and determining, from the distance measurements, quantification each of the plurality reaction products. The device may be configured for quantifying a plurality of catalysed gas-phase polymerisation reactions. Where the device is configured for quantifying a plurality of catalysed gas-phase polymerisation reactions, the reaction surface of the reaction support member may have a plurality of sub-regions for receiving the plurality polymerisation reactions and the plurality of reaction product piles therefrom; and the distance measurement system may be configured to measure a plurality of distances each related to the heights of the plurality of reaction product piles.

### FIGURE LEGENDS

**FIG. 1** is an illustration of the invention where a reaction product pile is disposed on a reaction surface.
**FIG. 2** is a side view of a device described herein comprising a single sub-region disposed on a reaction surface and force sensor attached to a detector-supporting surface.
**FIG. 3** is a side view of a device described herein comprising a single sub-region disposed on a reaction surface and a height sensor attached to a detector-supporting surface.
**FIG. 4** is a side view of a device described herein comprising a single sub-region disposed on a reaction surface and a height sensor attached to a detector-supporting surface.
**FIG. 5** is a side view of a device described herein comprising a plurality of sub-regions disposed on a reaction surface and a plurality of complementary detectors attached to a detector-supporting surface.
**FIG. 6** is a side view of a device described herein comprising four reaction product piles, sub-regions, and force sensors. The force sensors are clear of the reaction product pile.
**FIGs. 6A** to **6C** show a sequence of advancement of the second rigid surface, until each the reaction product pile is in contact with a force sensor.
**FIG. 7** is a schematic representation of an automatic device described herein for quantifying four separate polymerisation reactions.
**FIG. 8** is a photograph of five reaction product piles resulting from an ethylene polymerisation performed in the gas phase at five different concentrations of catalyst.
**FIG. 9** is a graph showing the reading of five force sensors in a device described herein as a function of displacement of the second rigid surface on which the force sensors are attached.

### DETAILED DESCRIPTION OF THE INVENTION

Before the present method used in the invention is described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The term "about" as used herein when referring to a measurable value such as a parameter, an amount, a temporal duration, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The present invention relates to a method and device for the quantitative, preferably semi-quantitative measurement of product yielded by a catalysed polymerisation reaction. In particular, it relates to a method and device for measurement of relative product yields of a plurality of catalysed polymerisation reactions. The catalysed polymerisation reaction is preferably an ethylene (CH₂=CH₂) polymerisation.

The inventors have found that a polymerisation reaction performed in the gas phase on a surface produces a reaction product in the form of a pile or heap, the height of which differs according to the reaction yield. The reaction product pile is maintained in the form of a pile, typically having a squat conical shape, on the reaction surface by the force of gravity. Each reaction pile is formed on the reaction surface. The present method and device measure a distance that is related to the height of the product pile and hence to the polymerisation reaction product yield. In particular, the method and device finds utility in the comparative measurement of catalyst activity for a plurality of different catalysts, or for the same catalyst at different concentrations, when catalysing a polymerisation reaction using otherwise the same reagents. In particular, the method or device may provide an array of sub-regions on a surface. Separate polymerisation reactions may be performed in the gas phase in the separate sub-regions on the surface giving rise to a plurality of distinct reaction product piles. The relative reactivities of catalysts may be compared simultaneously in a one-step quantification by virtue of the present invention.

One embodiment of the invention relates to a method for quantifying the product of one or more catalysed gas-phase polymerisation reactions. The method comprises performing the one or more polymerisation reactions on one or more sub-regions of a reaction surface to obtain one or more polymerisation reaction product piles. It is appreciated that each polymerisation reaction is performed on a separate sub-region. The method further comprises obtaining one or more distance measurements related to the heights of the one or more reaction product piles. It is understood that a distance measurement is obtained for each reaction product pile. The method further comprises determining, from the one or more distance measurements, quantification of the one or more reaction products (40).

In particular, a method for quantifying the product of a catalysed gas-phase polymerisation reaction may comprise:
- performing the polymerisation reaction on a sub-region of a reaction surface to obtain a polymerisation reaction product pile,
- obtaining a distance measurement related to the height of the product pile, and
- determining, from the distance measurement, the quantity of product.

The method may be used to quantify the products of a plurality of catalysed gas-phase polymerisation reactions, in which case a plurality of distance measurements related to the heights of the plurality of reaction product piles are obtained. There is typically one distance measurement per reaction product pile. Thus, the invention further relates to a method for quantifying the products of a plurality of catalysed gas-phase polymerisation reactions comprising:
- performing the polymerisation reactions on a plurality of separate sub-regions of a surface to obtain a plurality of polymerisation reaction product piles,
- obtaining distance measurements related to the heights of the plurality of reaction product piles, and
- determining, from the distance measurements of the plurality of reaction products, the quantities of products.

A second embodiment of the invention relates to a device according to claim 8 for quantifying a product of one or more catalysed gas-phase polymerisation reaction. The device comprises a reaction surface having one or more sub-regions for receiving the one or more polymerisation reactions and one or more reaction product piles therefrom. It is appreciated that each polymerisation reaction and a reaction product pile therefrom is received on a separate sub-region.
The device further comprises a distance measurement system configured to measure one or more distances related to the heights of the one or more reaction product piles. It is understood that the distance measurement system is configured to obtain a distance measurement for each reaction product pile.

The device may be configured to quantify the products of a plurality of catalysed gas-phase polymerisation reaction, in which case the device comprises a plurality of sub-regions for receiving or supporting a plurality of polymerisation reaction and product thereof, and the distance measurement system is configured to provide distances related to the heights of the reaction product piles.

The distance measurement is related to the height of the reaction product pile. The height of the reaction pile is the minimum distance between the base of the reaction pile and the top of the reaction pile. The top of the reaction pile is the highest point; it may be a peak or an apex. The distance measurement is of the top of reaction pile. The distance measurement is indicative of the height of the reaction product pile. In other words, the distance measurement has a proportional relationship with the product pile height, and changes responsive to the height of the pile. The relationship may be direct, indirect (*e.g*. logarithmic), inverse direct, and inverse indirect. The measurement may be of the distance between the top of the reaction pile and the base of the reaction pile. The measurement maybe of the distance between the top of the reaction pile and a measurement sensor. The distance measurements are preferably performed when the reaction surface is removed from the polymerisation reactor.

The distance may be measured using any technique. For instance, using a detector such as a range finder (ultrasonic, infrared, laser), a laser scanner, a camera configured for distance measurement, or a mechanical caliper-type system incorporating a force sensor to detect contact by the caliper with the top of the reaction pile. Where there is a plurality measurements, they may be performed using a single detector such as a camera that captures measurement information of the plurality of reaction product piles, or using multiple detectors such as a plurality of range finders or force sensors, one for each reaction. In the device of the invention, the distance is measured using a distance measurement system; the distance measurement system may comprise one or more detectors.

The method and device enable quantification of the one or more reaction products. The quantity of reaction product is determined from the distance measurement that is related to the height of the reaction product pile. Since the height of the reaction product pile is related to the yield, a larger height is indicative of a greater the product yield. The quantification may be quantitative, semi-quantitative, or relative. Standards may be used to provide quantification. Relative quantities are determined for a plurality of reactions provided on the same first rigid surface.

The reaction surface is provided with a sub-region for receiving or supporting the polymerisation reaction and product thereof. The sub-region may be a delimited sub-area of the reaction surface. It may be marked, or indented, or otherwise indicated. Equally, it may not be indicated. The reaction surface is preferably essentially planar. The reaction surface may be essentially rigid. Where the distance measurement system incorporates a force sensor, the reaction surface is able to withstand compression forces arising from contact with the force sensor. Preferably, the reaction surface is dismountable from the device. Preferably the reaction surface is comprised in a glass plate.

Preferably, the reaction surface is suitable as a carrier for carrying out the polymerisation reactions in the gas phase. As such, it exhibits an inherent inertness and ability to withstand the temperatures and pressures of the reactor conditions. It is preferably made at least partially, preferably entirely from glass. Once the polymerisation has been performed, the rigid reaction surface may be transferred directly for incorporation into the device or method of the invention for quantification of the reaction yield.

The reaction surface may be provided with one or more (*e.g.* 1, 2, 3, 4, 5, 6, 7, 8, 9, 10, 11, 12 or more) sub-regions. A plurality of sub-regions allows a high throughput screening of different catalysts and/or concentrations facilitated by the simultaneous quantification of reaction yields using the present device and method. The sub-regions are spatially separated. Where there is a plurality of sub-regions, they may be arranged in a line (*e.g.* 1 x 3, 1 x 4, 1 x 8, x 12) or in an array (*e.g*. 2 x 2, 3 x 2, 3 x 3, 8 x 12 etc).

Corresponding to the plurality of sub-regions may be a complementary spatial arrangement of detectors attached to a second rigid surface such that the detectors are aligned with the respective sub-regions. By providing a plurality of sub-regions and detectors onto their respective rigid surfaces, distances to the top of the reaction piles are measured simultaneously.

According to the invention, the reaction surface is provided on a reaction support member. The reaction support member is configured for removable insertion into polymerisation reactor. The reaction support member may be any suitable shape for placement into the polymerisation reactor. It may further be any suitable shape for dismountable attachment to the device of the invention. Preferably, it comprises a flat plate, square or longitudinal, one surface - most preferably an upper surface - being the reaction surface. As with the reaction surface, the reaction support member may be essentially rigid. Where the distance measurement system incorporates a force sensor, the reaction support member may be able to withstand compression forces arising from contact with the force sensor. Preferably, the reaction support member is dismountable from the device. Preferably the reaction support member is comprised in a glass plate.

One or more reaction piles are one or more polymer products of a catalysed gas-phase polymerisation. The catalysed gas-phase polymerisation may be performed on the reaction surface of the reaction support member. After performing the reaction, the polymer product on the reaction surface of the reaction support member is transferred to the method or device of the invention. In particular, the method and device finds utility in the quantitative yield measurement of each the plurality of polymers each made using a different catalyst, using the same catalyst at different concentrations, when catalysing a polymerisation reaction using otherwise the same reagents. In particular, the method or device may provide an array of sub-regions on the reaction surface of the reaction support member. Separate polymerisation reactions may be performed in the gas phase in the separate sub-regions on the reaction support member giving rise to a plurality of distinct reaction product piles.

Accordingly, the one or more reaction piles, prior to quantification, may be formed by :
- dispensing one or more polymerisation catalysts onto one or more sub-regions of the reaction surface of the reaction support member;
- placing the reaction support member into a gas-phase polymerisation reactor,
- performing a gas-phase catalysed polymerisation reaction, to form the one or more polymerisation reaction product piles on the reaction surface of the reaction support member;
- removing the reaction support member from the gas-phase polymerisation reactor, thereby providing one or more polymerisation reaction product piles on one or more sub-regions of the reaction surface of the reaction support member for quantification of the one or more reaction products.

The reaction surface may be provided with one or more catalysts, in particular, one or more catalyst aliquots, for performing the polymerisation reaction. The catalyst may be dispensed on the reaction surface. Where there is a plurality of catalysts, typically, each catalyst is provided on a separate sub-region of the reaction surface. The reaction surface may be provided with reagents of the polymerisation reaction, by a method comprising the steps:
i) applying an adhesive layer to the reaction surface, and
ii) adding a catalyst solid support layer by applying at least one dry-particulate catalyst solid support to the adhesive layer.

Step i) is performed prior to step ii). A mask may be applied over the adhesive layer, or over the catalyst support layer, which mask comprises a plurality of apertures, each aperture corresponding to a sub-region.

The dry-particulate catalyst support may comprise one or more of solid inorganic oxides, silica, alumina, magnesium oxide, titanium oxide, thorium oxide, mixed oxides of silica, Group 2 or 13 metal oxides, silica-magnesia, silica-alumina mixed oxides, talc, resin, polyolefin.

One or more compositions comprising at least one catalyst may be added to the catalyst solid support layer. The term "composition comprising at least one catalyst" as used herein refers to a substance comprising one or more catalysts, optionally together with one or more co-catalysts and/or optionally together with one or more activating agents. The composition comprising one or more catalysts is applied into a region or zone of the catalyst solid support layer. The catalyst may be applied in a suitable carrier solvent such as toluene.

As used herein, the term "catalyst" refers to a substance that causes a change in the rate of a polymerization reaction without itself being consumed in the reaction. In the present invention, the catalysts are especially suitable for the polymerization of olefin monomers and co-monomers to polyolefins, for example, the polymerization of ethylene to polyethylene, or propylene to polypropylene. Examples of a catalyst include metallocene catalyst, chromium catalyst, or Ziegler-Natta catalyst.

The term "metallocene catalyst" is used herein to describe any transition metal complexes consisting of metal atoms bonded to one or more ligands. The metallocene catalysts are compounds of Group IV transition metals of the Periodic Table such as titanium, zirconium, or hafnium, and have a coordinated structure with a metal compound and ligands composed of one or two groups of cyclo-pentadienyl, indenyl, fluorenyl or their derivatives. Use of metallocene catalysts in the polymerization of polyethylene has various advantages. The key to metallocenes is the structure of the complex. The structure and geometry of the metallocene can be varied to adapt to the specific need of the producer depending on the desired polymer. Metallocenes comprise a single metal site, which allows for more control of branching and molecular weight distribution of the polymer. Monomers are inserted between the metal and the growing chain of polymer.

In an embodiment, the metallocene catalyst has a general formula (I) or (II):

(Ar)₂MQ₂ (I);

or

R¹(Ar)₂MQ₂ (II)

wherein the metallocenes according to formula (I) are non-bridged metallocenes and the metallocenes according to formula (II) are bridged metallocenes;
wherein said metallocene according to formula (I) or (II) has two Ar bound to M which can be the same or different from each other;
wherein Ar is an aromatic ring, group or moiety and wherein each Ar is independently selected from the group consisting of cyclopentadienyl, indenyl, tetrahydroindenyl or fluorenyl, wherein each of said groups may be optionally substituted with one or more substituents each independently selected from the group consisting of halogen, a hydrosilyl, a SiR²₃ group wherein R² is a hydrocarbyl having 1 to 20 carbon atoms, and a hydrocarbyl having 1 to 20 carbon atoms and wherein said hydrocarbyl optionally contains one or more atoms selected from the group comprising B, Si, S, O, F, Cl and P;
wherein M is a transition metal M selected from the group consisting of titanium, zirconium, hafnium and vanadium; and preferably is zirconium;
wherein each Q is independently selected from the group consisting of halogen; a hydrocarboxy having 1 to 20 carbon atoms; and a hydrocarbyl having 1 to 20 carbon atoms and wherein said hydrocarbyl optionally contains one or more atoms selected from the group comprising B, Si, S, O, F, Cl and P; and
wherein R¹ is a divalent group or moiety bridging the two Ar groups and selected from the group consisting of a C₁-C₂₀ alkylene, a germanium, a silicon, a siloxane, an alkylphosphine and an amine, and wherein said R¹ is optionally substituted with one or more substituents each independently selected from the group consisting of halogen, a hydrosilyl, a SiR³₃ group wherein R³ is a hydrocarbyl having 1 to 20 carbon atoms, and a hydrocarbyl having 1 to 20 carbon atoms and wherein said hydrocarbyl optionally contains one or more atoms selected from the group comprising B, Si, S, O, F, Cl and P.

The term "hydrocarbyl having 1 to 20 carbon atoms" as used herein is intended to refer to a moiety selected from the group comprising a linear or branched C₁-C₂₀alkyl; C₃-C₂₀cycloalkyl; C₆-C₂₀aryl; C₇-C₂₀alkylaryl and C₇-C₂₀arylalkyl, or any combinations thereof. Exemplary hydrocarbyl groups are methyl, ethyl, propyl, butyl, amyl, isoamyl, hexyl, isobutyl, heptyl, octyl, nonyl, decyl, cetyl, 2-ethylhexyl, and phenyl. Exemplary halogen atoms include chlorine, bromine, fluorine and iodine and of these halogen atoms, fluorine and chlorine are preferred.

Illustrative examples of metallocene catalysts comprise but are not limited to bis(cyclopentadienyl) zirconium dichloride (Cp₂ZrCl₂), bis(cyclopentadienyl) titanium dichloride (Cp₂TiCl₂), bis(cyclopentadienyl) hafnium dichloride (Cp₂HfCl₂); bis(tetrahydroindenyl) zirconium dichloride, bis(indenyl) zirconium dichloride, and bis(n-butyl-cyclopentadienyl) zirconium dichloride; ethylenebis(4,5,6,7-tetrahydro-1-indenyl) zirconium dichloride, ethylenebis(l-indenyl) zirconium dichloride, dimethylsilylene bis(2-methyl-4-phenyl-inden-1-yl) zirconium dichloride, diphenylmethylene (cyclopentadienyl)(fluoren-9-yl) zirconium dichloride, and dimethylmethylene [1-(4-tert-butyl-2-methyl-cyclopentadienyl)](fluoren-9-yl) zirconium dichloride.

The term "chromium catalysts" refers to catalysts of chromium oxide. The chromium oxide may be deposited on a support, *e.g*. a silica or aluminium support. Illustrative examples of chromium catalysts comprise but are not limited to CrSiO₂ or CrAl₂O₃.

The present invention especially relates to Ziegler-Natta catalysts. The term "Ziegler-Natta catalyst" or "ZN catalyst" refers to catalysts having a general formula M¹Xᵥ, wherein M¹ is a transition metal compound selected from group IV to VII, wherein X is a halogen, and wherein v is the valence of the metal. Preferably, M¹ is a group IV, group V or group VI metal, more preferably titanium, chromium or vanadium and most preferably titanium. Preferably, X is chlorine or bromine, and most preferably, chlorine. Illustrative examples of the transition metal compounds comprise but are not limited to TiCl₃, TiCl₄. Suitable ZN catalysts for use in the invention are described in US6930071 and US6864207.

The reaction surface, after application of catalyst to the one or more subregions, may subsequently be subjected to conditions for catalytic polymerization to form a polymeric product. The polymerization reaction is performed in the gas phase, preferably in a gas phase reactor. A gas phase reactor provides control of reaction pressure and optionally of temperature. The reaction carrier is placed into the gas phase reactor, which is fed with monomer, optionally hydrogen, and optionally one or more co-monomers. The monomers and optionally co-monomers are preferably in the gaseous state, or provided as an aerosol.

The feed into the reaction may be homopolymers of an olefin, or copolymers of two olefins; or copolymers of at least one olefin and at least one polymerizable comonomer.

Said olefins can be notably alpha-olefins such as ethylene propylene, butene-1, propene-1, hexene-1 and octene-1. Preferably, the olefin is selected from the group comprising ethylene, propylene and combination thereof. More preferably, the polyolefin is polyethylene or polypropylene or combination thereof. The polyolefin may be produced by any process and using any catalyst suitable for polymerizing ethylene and α-olefins.

Suitable polyethylene includes but is not limited to polyethylene obtained by homopolymerization of ethylene, copolymerization of ethylene and a higher 1-olefin co-monomer.

Suitable polypropylene includes but is not limited to polypropylene obtained by homopolymerization of propylene, copolymerization of propylene and an olefin co-monomer.

The term "co-monomer" refers to olefin co-monomers which are suitable for being polymerized with olefin monomers, preferably ethylene or propylene monomers. Co-monomers may comprise but are not limited to aliphatic C₂-C₂₀ alpha-olefins. Examples of suitable aliphatic C₂-C₂₀ alpha-olefins include ethylene, propylene, 1-butene, 4-methyl-1-pentene, 1-hexene, 1-octene, 1-decene, 1-dodecene, 1-tetradecene, 1-hexadecene, 1-octadecene and 1-eicosene. The term "co-polymer" refers to a polymer, which is made by linking two different types of in the same polymer chain. The term "homo-polymer" refers to a polymer which is made by linking olefin (preferably ethylene) monomers, in the absence of co-monomers.

According to a preferred aspect of the invention, the monomer is ethylene, optionally provided with one or more olefin co-monomers to form a polyethylene resin. The polyethylene resin prepared with the present reaction carrier can be an ethylene homopolymer or an ethylene co-polymer.

The polymerization reaction may be performed at a temperature of 40-115 °C, preferably 50-70 °C. The operating pressure of the gas phase reactor may be 10-30 bar, preferably from 15-25 bar.

The polymerization reaction is generally allowed to proceed until completion. However, the reaction can be stopped at any time, for example, when evaluating a plurality of catalysts each having a different activity. Generally, when the catalysts under evaluation are from the same family, a reaction time of 2, 3, 4, 5, 6, 7, 8, 9, 10, 11, 12, 14, 16, 18, 20, 25, or 30 minutes can suffice. If insufficient product is formed, the reaction can be repeated for longer using a fresh reaction carrier. In the case of metallocene catalysts, for example, reaction time is preferably less than 10 minutes.

Typically a polymerization reaction is performed using a molar excess of monomer and optionally co-monomer to catalyst. Suitable ratios include a molar ratio of monomer and optionally co-monomer to catalyst of 10:1, 50:1, 100:1. It will be understood that the reaction carrier permits the testing of a wide range of conditions, thus the molar ratio need not be within the aforementioned ranged and optimised for every reaction.

The detector or plurality of detectors are preferably provided on a detector-supporting surface (DSS). The DSS is preferably essentially rigid. The DSS is preferably essentially planar. The DSS may be made at least partly, preferably entirely, from glass, metal, composite, or polymeric material.

The DSS may be provided with one or more (*e.g.* 1, 2, 3, 4, 5, 6, 7, 8, 9, 10 or 12 or more) detectors. Each detector is preferably rigidly attached to the DSS. The detecting part of the detector is positioned away from the DSS *i.e.* in the direction of the reaction surface. A plurality of detectors allows a high throughput screening of different catalysts and/or concentrations facilitated by the simultaneous quantification of reaction yields using the present device and method. The detectors are spatially separated. Where there is a plurality of detectors, they may be arranged in a line (*e.g*. 1 x 3, 1 x 4, 1 x 8, 1 x 12) or in an array (*e.g.* 2 x 2, 3 x 2, 3 x 3, 8 x 12 etc). Corresponding to the plurality of detectors is a complementary spatial arrangement of sub-regions disposed on the reaction surface such that the detectors are aligned with the respective sub-regions.

As mentioned earlier, the spatial arrangement of detectors attached to a DSS may complement the spatial arrangement of the plurality of sub-regions disposed on the reaction surface, such that the detectors are aligned with the sub-regions.

The detectors may be fixed *i.e.* not displaceable during measurement. Alternatively, the detector may be provided in displaceable relation to the sub-region of the reaction surface during measurement, in particular when the detectors are force sensors. The DSS thus may be displaceable relation to the reaction surface.

The reaction surface and the DSS may be mutually parallel. The reaction surface and the DSS may be mutually perpendicular. Preferably, the reaction surface and the DSS are horizontal. Preferably, the reaction surface is below the DSS. Preferably, the DSS is above the reaction surface. Preferably, the reaction surface and the DSS overlap. Preferably, the DSS is above the reaction surface. The reaction surface disposed with sub regions is adjacent to the DSS disposed with force sensors. Preferably, the device is configured to place the reaction surface opposite the DSS, and the plurality of sub-regions and plurality of detectors in mutual alignment for the measurement of distances to the top of the polymerisation reaction product piles. The mutual alignment may be achieved by disposing the detectors in a pattern on the reaction surface and having the same pattern mirrored on the DSS of detectors.

According to one aspect of the invention, the detector is a force sensor that is provided for the measurement of force applied to the polymerisation reaction product. The device is configured to align the force sensor with the sub-region. The distance between the reaction surface and the force sensor is controllably adjustable. The force sensor may be displaceable relative to the reaction surface, or the reaction surface may be displaceable relative to the force sensor, or the reaction surface and the force sensor may be displaceable relative to each other. The device may be configured for the measurement of force recorded by the sensor as a function of an indicator of the distance between the reaction surface and the force sensor. The indication of the distance may be a direct or indirect measure of the distance between the reaction surface and the DSS. An indirect measure may be the distance travelled by the rigid reaction surface or by the force sensor.

Thus, according to one aspect of the invention is a device described herein, wherein:
- the distance measurement system comprises:
   - one or more force-sensors disposed on the DSS that is arranged parallel to and overlapping with the reaction surface, and
   - a distance indicator for measuring changes of distance between the DSS and the reaction surface,
- the distance between the DSS and reaction surface is controllably adjustable.

The distance measurement system may be configured to provide readings from the one or more force sensors and distance indicator after the distance between the DSS and the reaction surface has changed. The distance measurement system may be configured to provide readings from the one or more force sensors and distance indicator continuously or frequently. The distance measurement system is preferably configured to provide simultaneously or consecutively readings from the one or more force sensors and distance indicator. From a multitude of readings obtained from the force sensor at particular distances between the DSS and the reaction surface, an indication of the height of the reaction can be determined. Typically, the reading of the force sensor distance (*e.g.* a resistance value) is plotted against an indication of the distance travelled by the one of both surfaces (*e.g*. the position of a micrometric screw). The distance at which the force sensor provides a change in reading and contacts the top of the reaction pile is indicative of the height of the reaction pile. Accordingly, the distance measurement system may be configured for the measurement of force recorded by the sensor as a function of the change of distance between the DSS and the reaction surface, thereby obtaining a measurement relating to the height of the reaction product pile.

The force sensor may be any known in the art. Typically, a force sensor is a force-sensitive device that changes electrical properties responsive to the application of mechanical force. It may be a mechanical force sensor, or a pressure sensor, or a touch sensor, for instance. The force sensor may have binary states (on/off) or have a multitude of states (*e.g*. finite or infinite) depending on the applied force. The force sensor having binary states may be a sprung switch (*e.g*. a leaf spring switch). The force sensor having a multitude of states may be a force transducer. The electrical property includes resistance or current generation. The force sensor is sufficiently sensitive to detect by contact the tip of the reaction pile resulting from the polymerisation. A force sensor is preferably connectable to a computer interface (*e.g*. Universal Serial Bus) so that measurements can be recorded electronically. An example of a suitable force sensor is the Flexiforce ® sensor manufactured by Tekscan.

The force sensor is preferably provided on a detector-supporting surface (DSS) as described elsewhere herein; the DSS is preferably essentially rigid.

The force sensor may be fixed *i.e.* not displaceable during measurement. Alternatively, the force sensor may be provided in displaceable relation to the sub-region of the reaction surface. Preferably, the force sensor is linearly displaceable - that is to say, it follows the path of a straight line in the direction of the corresponding sub-region. However, other patterns of displacement are foreseen, such as arc, cam or other movements. The path of displacement by the force sensor is towards the sub-region. Preferably, the path is essentially perpendicular to the sub-region. The direction of displacement is towards the sub-region. Preferably, the force sensor is displaceable in a straight line that extends through the sub-region.

The DSS thus may be displaceable relation to the reaction surface. The DSS may be linearly displaceable - that is to say, it follows the path of a straight line in the direction of the reaction surface. However, other patterns of displacement are foreseen, such as arc, cam or other movements. The path of displacement by the rigid DSS is towards the reaction surface. Preferably, the path is essentially perpendicular to the reaction surface. The direction of displacement is towards the reaction surface. Preferably, the DSS is displaceable in a straight line that can be extrapolated through the reaction surface. Preferably, the DSS and the reaction surface remain parallel to each other during displacement.

The distance between the force sensor and the sub-region may be controllable using an adjustable spacer. The distance between the reaction surface and DSS may be controllable using an adjustable spacer.

The adjustable spacer may be configured to displace gradually the force sensor relative to the sub-region, or to displace the sub-region relative to the force sensor, or to displace both. Preferably, the adjustable spacer is be configured to position the force sensor in a starting position that is clear of the tip of the reaction product pile. The adjustable spacer may be configured to place the force sensor during measurement in contact with the reaction product pile. Hence, the minimum range of movement adjustable by the adjustable spacer may be greater than the height of the reaction product. The minimum range of movement adjustable by the adjustable spacer suffices to bring the force sensor from a starting position clear of the reaction product pile, into contact with the reaction product pile during measurement.

The adjustable spacer may be configured to position the sub-region in a starting position such that the force sensor is clear of the tip of the reaction product pile. The adjustable spacer may be configured to place the reaction product pile during measurement in contact with the force sensor. Hence, the minimum range of movement adjustable by the adjustable spacer suffices to bring the reaction product pile from a starting position into contact with the force sensor during measurement.

The adjustable spacer may be manually, or electrically, hydraulically or pneumatically operated.

In a preferred embodiment, the adjustable spacer comprises one or more (*e.g*. 2, 3, 4 or 5 or more) screw threaded rods. One end of the threaded rod may be revolutely attached in relation to the one of the pair of elements, which pair of element comprises the reaction surface and the DSS or force sensor, and the thread engages with a complementarily threaded keeper attached in relation to the other of the pair. Rotation of the threaded rod results in a linear movement of one element in relation to the other. The direction of displacement depends on the direction of rotation of the rod. The threaded rod may be incorporated into a micrometric screw. In another embodiment, the adjustable spacer comprises one or more (*e.g*. 2, 3, 4 or 5 or more) rack and pinion assemblies.

The device incorporating the force sensor may be provided with a distance indicator (Dl), configured to provide an indication of the distance travelled by the force sensor, by the sub-region, or both. Preferably, the Dl is configured to provide an indication of a change of distance between the force sensor and the reaction surface during measurement. Preferably, the Dl is configured to measure the distance electronically, and may comprise, for instance, a linear encoder, a rotary encoder coupled to a screw threaded rod, or a range finder. The Dl may be configured to measure the distance manually, and may be, for instance, a set of manually actuated calipers or a graduated scale. The distance may be measured manually by counting a number of screw-turns of a threaded adjustable spacer, using the calipers, or by reading a graduated scale after each displacement. Thus, distance measurement system may comprise one or more force sensors and one or more (*e.g.* 1, 2, 3 or more) Dls.

Reference is made in the description below to the drawings which exemplify particular embodiments of the invention; they are not at all intended to be limiting. The skilled person may adapt the device and substituent components and features according to the common practices of the person skilled in the art.

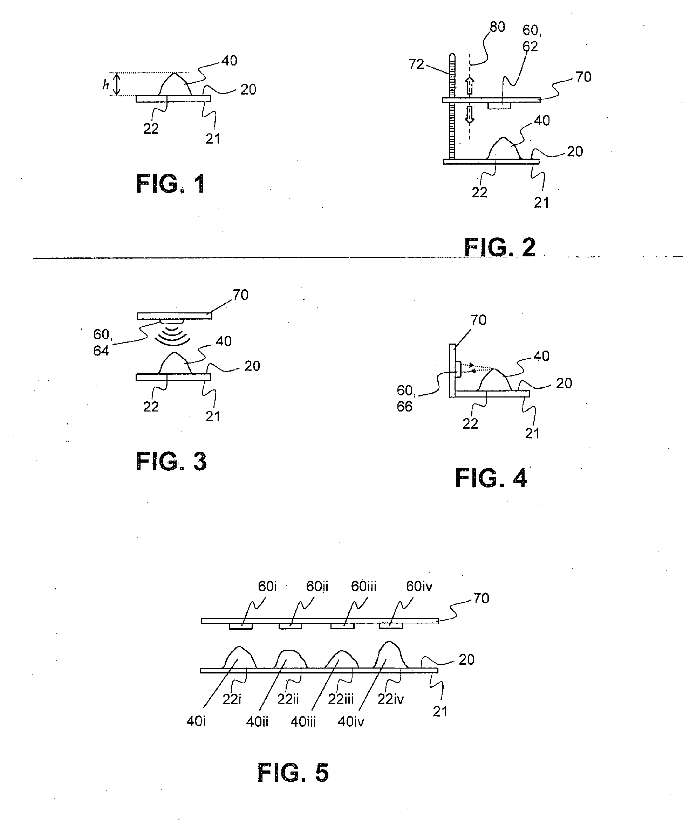

**FIG. 1** shows a schematic of a basic implementation of the invention where a reaction surface **20** of a reaction support member **21**, which reaction surface 20 has a sub-region **22**, is disposed with a reaction product pile **40** on the sub-region **22** resulting from an earlier catalysed polymerisation reaction. The distance "h" between the between the top of the reaction pile and the sub-region **22** is indicated. A measurement related to "h" provides an indication of the yield of the reaction
**FIG. 2** shows a schematic of an implementation of the invention where a rigid reaction surface **20** of a reaction support member **21** has a sub-region **22**, and a detector **60** that is a force sensor **62** is mounted on a rigid DSS **70**. An axis of displacement **80** is indicated. By displacement of the DSS **70**, the force sensor **62** advances in a linear movement towards the sub-region **22** where it touches the tip of the reaction product pile **40** and triggers a response by the force sensor **60**. The distance travelled by the DSS **70** or force sensor **62** is read-off a graduated scale **72** which distance can be used to calculate the height of the reaction pile **40**.
**FIG. 3** shows the reaction product of **FIG. 1** on the reaction surface together with a detector **60** that is a distance sensor **64** (*e.g*. infrared, laser or ultrasonic) mounted on a detector-supporting surface (DSS) **70**. When the distance between the reaction surface **20** and the DSS **70** (or more properly the distance sensor **64**) is known, distance information from the distance sensor can be used to calculate the height of the reaction product pile **40**.
**FIG. 4** shows the reaction product of **FIG. 1** on the reaction surface together with a detector **60** that is a height sensor **66** (*e.g*. laser profile measurer) mounted on a detector-supporting surface (DSS) **70**. When the distance between the reaction surface **20** and the height sensor **66** is known, distance information from the height sensor **66** can be used to calculate the height of the reaction product pile **40**.
**FIG. 5** shows a plurality of reaction products piles **40i** to **40iv** each disposed on a separate sub-region **22i** to **22iv** of a single reaction surface **20** of a reaction support member **21**. A plurality of detectors **60i** to **60iv** is provided, one aligned over each sub-region **22i** to **22iv** and mounted on a detector-supporting surface (DSS) **70**. Distance information from the detectors **60** can be used to calculate the relative heights of the reaction product piles **40i** to **40iv**, and the relative reaction yields.

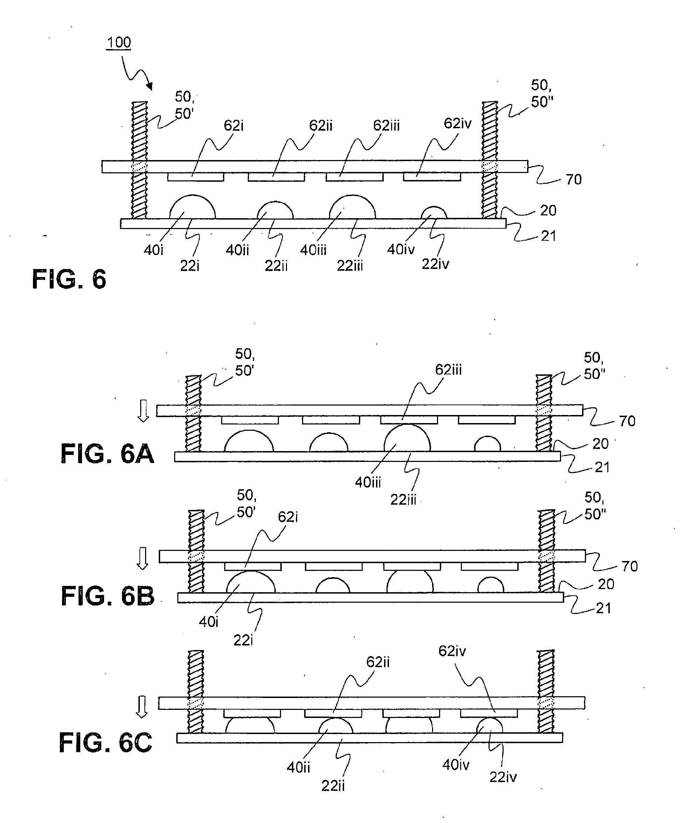

**FIG. 6** depicts an embodiment of the device **100** wherein there is a plurality of sub-regions (**22i, 22ii, 22iii, 22iv**) on the rigid reaction surface **20** of a reaction support member **21** and a plurality of complementary force sensors (**62i, 62ii, 62iii, 62iv**) arranged on the second rigid surface **70**. Each sub-region (**22i, 22ii, 22iii, 22iv**) on the rigid reaction surface **20** is disposed with a reaction product pile (**40i, 40ii, 40iii, 40iv**) to be quantified. An adjustable spacer **50** is provided that takes the form of a pair of threaded rods **50', 50"**, each revolutely and dismountably attached to the rigid reaction surface **20**, the thread of which engages with a complementary threaded hole in the second rigid surface **70**. Rotation of the threaded rods **50', 50"** is transformed into a linear translation of the second rigid surface **70**. In **FIG. 6A**, adjustable spacer **50** has been adjusted to advance the second rigid surface **70** towards the reaction piles. The third force sensor **62iii** is in contact with the third reaction pile **40iii**, which would register a reading. In **FIG. 6B**, adjustable spacer **50** has been adjusted to advance further the second rigid surface **70** towards the reaction piles. The first force sensor **62i** is in contact with the first reaction pile **40i**, which would register a reading. In **FIG. 6C**, adjustable spacer **50** has been adjusted to advance further still the second rigid surface **70** towards the reaction piles. The second and fourth force sensors **62ii, 62iv** are in contact with the second and fourth reaction piles **40ii, 40iv**, which would register a reading.

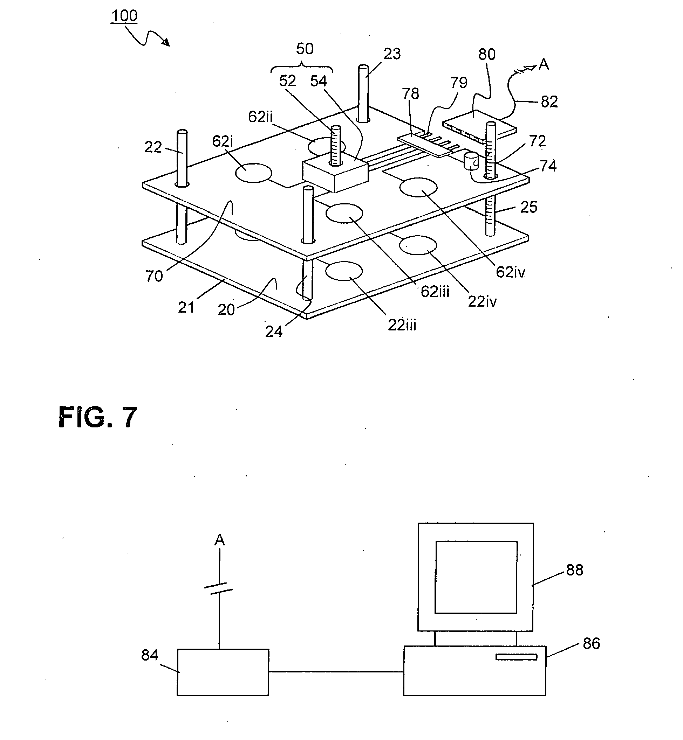

**FIG. 7** depicts an automated version of the device **100**. A plurality of sub-regions (**22ii**, **22iv**) is provided on the rigid reaction surface **20** of a reaction support member 21 and a plurality of complementary force sensors (**62i**, **62ii, 62iii, 62iv**) is arranged on the second rigid surface **70**. In **FIG**. **7**, the back (non-detecting) side of the sensors is shown. Each force sensor (**62i, 62ii, 62iii, 62iv**) is electrically connected to a port interface **78** present on the rear of the second rigid surface **70**. Further provided is an adjustable spacer **50** comprising a toothed rod **52** (a rack of a rack and pinion assembly) dismountably rigidly attached to the rigid reaction surface **20** which passes freely through a hole in the second rigid surface **70**. The teeth of the rod **52** engage with a cog (pinion) driven by to an electrical motor provided in a housing **54**. Linear displacement of the second rigid surface **70** is controlled by the electrical motor in the housing **54**. The electrical motor may be a servo or stepper motor. The electrical motor is electrically connected to the port interface **78**. The second rigid surface **70** is stabilised relative to the rigid reaction surface **20** by virtue of four supporting rods (**22, 23, 24, 25**) rigidly attached to the rigid reaction surface **20**. Second rigid surface **70** is slidably connected to each supporting rod (**22, 23, 24, 25**) via a set of complementary holes, spatially arranged to align with the position of supporting rods (**22, 23, 24, 25**). A distance indicator is provided that is a combination of a linear encoder **74** and a graduated scale **72**; the linear encoder comprises a light source and detector (read-head) rigidly attached to the second rigid surface **70**, configured to detect the graduated scale **72** rigidly attached to on one of the supporting rods **25**. The linear encoder is electrically connected to the port interface **78**. The port interface **78** receives or provides electrical signals from or to the electrically components (*i.e.* force sensors, electrical motor, linear encoder). It may optionally provide power to one or more of the components. The port interface **78** also comprises a connector **79** for connection via a reciprocating connector **80** and cable **82** to a computer **86** optionally via a computer interface **84**.

### EXAMPLE

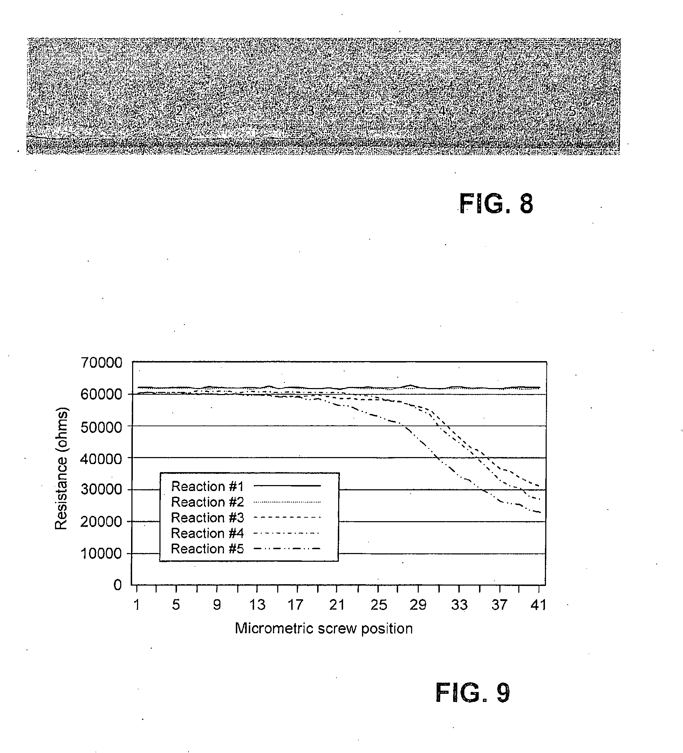

A reaction support member having a rigid reaction surface was prepared using a flat (planar) glass plate, coated on one surface with a polyurethane adhesive. Applied over the adhesive was a mask provided with circular apertures delimiting a plurality of sub-regions. A dry-particulated catalyst solid support in the form of alumina was applied to the masked adhesive layer. Excess alumina was removed by agitation. Composition comprising metallocene catalyst in toluene was applied at different concentrations to the sub-regions. Specifically, a 3µl aliquot of catalyst was applied at different concentrations to different sub-regions. Referring to **FIG. 8** sub-regions numbered 1 to 5 contained catalyst at concentrations of 0.15 mmol/L, 0.3 mmol/L, 1.5 mmol/L, 2 mmol/L, and 5 mmol/L respectively. The rigid reaction surface was placed in a gas phase reactor, and subject to polymerization using ethylene monomer at a pressure of 15 bar and a temperature of 50 °C for 3 hours.

After completion, a plurality of reaction product piles (1 to 5) was obtained; a photograph of reactions is shown in **FIG. 8**. The yield of each reaction of measured semi-quantitatively using the device of the invention equipped with five identical force sensors mounted on a detector-supporting surface. Each force sensors was aligned over a sub-region or reaction product pile. The distance between the rigid reaction surface and the detector-supporting surface was adjusted using a micrometric screw. The height of the detector-supporting surface was adjusted be just at 1 cm above the reaction surface (glass plate). A spirit level was used to ensure the rigid reaction surface and the detector-supporting surface were parallel during measurement. By moving the screw regularly, resistance measures were performed by the invention as described. Once the contact was made between the top of a reaction product pile and a force sensor, the resistance value of the force sensor dropped. **FIG. 9** shows a graph of the force (inversely proportional to the resistance) detected by the five force sensor in terms the resistance of the sensor, as a function of displacement of the sensors. The results show that the reaction with the highest yield (reaction #5) activated the force sensor by the least displacement of the second rigid surface.

## Claims

1. Method for quantifying the product of one or more catalysed gas-phase polymerisation reaction comprising:
- performing the one or more polymerisation reactions on one or more sub-regions (22) of a reaction surface (20) of a reaction support member (21) to obtain one or more polymerisation reaction product piles (40) each disposed on the reaction surface (20),
- obtaining one or more distance measurements related to the heights of the one or more reaction product piles (40); and
- determining, from the one or more distance measurements, quantification of the one or more reaction products (40).

2. Method according to claim 1, wherein prior to obtaining the one or more distance measurements, the reaction support member (21) is removed from a gas-phase polymerisation reactor in which the one or more catalysed gas-phase polymerisation reaction is performed.

3. Method according to claim 1, wherein the performing the one or more polymerisation reactions on one or more sub-regions (22) of a reaction surface (20) of a reaction support member (21) to obtain one or more polymerisation reaction product piles (40) comprises the steps:
- dispensing one or more polymerisation catalysts onto the one or more sub-regions (22) of the reaction surface (20) of the reaction support member (21);
- placing the reaction support member into a gas-phase polymerisation reactor;
- performing the gas-phase catalysed polymerisation reaction, to form the one or more polymerisation reaction product piles on the reaction surface (20) of the reaction support member (21); and
- removing the reaction support member (21) from the gas-phase polymerisation reactor, thereby providing one or more polymerisation reaction product piles on one or more sub-regions of the reaction surface (20) of the reaction support member (21).

4. Method according to any of claims 1 to 3, wherein the one or more distance measurements is performed using one or more detectors (60), and the one or more detectors is an ultrasonic range finder, an infrared range finder, a laser range finder, a laser scanner, a camera, a force sensor, a multiplicity of one of these, or a combination of one or more of these.

5. Method according to claim 4, wherein the one or more detectors (60) are provided on a detector-supporting surface, DSS, (70) arranged parallel to and overlapping with the reaction surface (20).

6. Method according to claim 4 or 5, wherein the one or more sub-regions (22) and one or more detectors (60) are in mutual spatial alignment for the measurement of the one or more distances related to the heights of the one or more reaction product piles (40).

7. Method according to any of claims 1 to 6, wherein a plurality of catalysed gas-phase polymerisation reactions is quantified.

8. Device (100) for quantifying a product of one or more catalysed gas-phase polymerisation reactions comprising:
- reaction support member (21) comprising a reaction surface (20) having one or more sub-regions (22) for receiving the one or more polymerisation reactions and one or more reaction product piles (40) therefrom; wherein the reaction support member (21) is detachable from the device (100) and configured for removable insertion into a gas-phase polymerisation reaction; and
- a distance measurement system configured to measure one or more distances related to the heights of the one or more reaction product piles.

9. Device according to claim 8, wherein:
- the distance measurement system comprises one or more detectors (60);
and
the one or more detectors is an ultrasonic range finder, an infrared range finder, a laser range finder, a laser scanner, a camera, a force sensor, a multiplicity of one of these, or a combination of one or more of these.

10. Device according to claim 9, wherein the one or more detectors (60) are provided on a detector-supporting surface, DSS, (70) arranged parallel to and overlapping with the reaction surface (20).

11. Device according to claim 9 or 10, wherein the one or more sub-regions (22) and one or more detectors (60) are in mutual spatial alignment for the measurement of the one or more distances related to the heights of the one or more reaction product piles (40).

12. Device (100) according to claim 10 or 11, wherein:
- the distance measurement system comprises:
- one or more force-sensors (62) disposed on the DSS (70) that is arranged parallel to and overlapping with the reaction surface (20); and
- a distance indicator configured to measure changes of distance between the DSS (70) and the reaction surface (20); and
- the distance between the DSS (70) and reaction surface (20) is controllably adjustable.

13. Device (100) according to any of claims 8 to 12 configured for quantifying a plurality of catalysed gas-phase polymerisation reaction.

## Patentansprüche

1. Verfahren zur Quantifizierung des Produktes einer oder mehrerer katalysierter Gasphasen-Polymerisierungsreaktionen, umfassend:
- Durchführen der einen oder mehreren Polymerisierungsreaktionen an einer oder mehreren Teilregionen (22) einer Reaktionsoberfläche (20) eines Reaktionsträgers (21), um einen oder mehrere Produktstränge (40) der Polymerisierungsreaktionen zu ergeben, die jeweils auf der Reaktionsoberfläche (20) angeordnet sind,
- Vornehmen einer oder mehrerer Abstandsmessungen über die Höhen der einen oder mehreren Reaktionsproduktstränge (40) und
- Ermitteln der Quantifizierung der einen oder mehreren Reaktionsprodukte (40) anhand der einen oder mehreren Abstandsmessungen.

2. Verfahren nach Anspruch 1, wobei vor der Vornahme der einen oder mehreren Abstandsmessungen der Reaktionsträger (21) aus einem Gasphasen-Polymerisierungsreaktor entfernt wird, in dem die eine oder mehreren katalysierten Gasphasen-Polymerisierungsreaktionen erfolgen.

3. Verfahren nach Anspruch 1, wobei das Durchführen der einen oder mehreren Polymerisierungsreaktionen an einer oder mehreren Teilregionen (22) einer Reaktionsoberfläche (20) eines Reaktionsträgers (21), um einen oder mehrere Produktstränge (40) der Polymerisierungsreaktionen zu ergeben, die nachfolgenden Schritte umfasst:
- Zugabe eines oder mehrerer Polymerisierungskatalysatoren in die eine oder mehreren Teilregionen (22) der Reaktionsoberfläche (20) des Reaktionsträgers (21);
- Einlegen des Reaktionsträgers in einen Gasphasen-Polymerisierungsreaktor;
- Durchführen der katalysierten Gasphasen-Polymerisierungsreaktion zur Bildung der einen oder mehreren Produktstränge auf der Reaktionsoberfläche (20) des Reaktionsträgers (21) und
- Entfernen des Reaktionsträgers (21) aus dem Gasphasen-Polymerisierungsreaktor, woraus sich ein oder mehrere Produktstränge auf einer oder mehreren Teilregionen der Reaktionsoberfläche (20) des Reaktionsträgers (21) ergeben.

4. Verfahren nach einem der Ansprüche 1 - 3, wobei die eine oder mehreren Abstandsmessungen mit einem oder mehreren Detektoren (60) erfolgen und die eine oder mehreren Detektoren ein Ultraschall-, Infrarot-, Laser-Entfernungsmesser, Laserscanner, eine Kamera, ein Kraftsensor, eine Mehrzahl einer der vorgenannten Alternativen oder eine Kombination aus einer oder mehreren dieser Alternativen ist.

5. Verfahren nach Anspruch 4, wobei die ein oder mehreren Detektoren (60) auf einer Detektortragefläche DSS (70) angeordnet sind, die parallel zur Reaktionsoberfläche (20) angeordnet ist und sich mit dieser überschneidet.

6. Verfahren nach Anspruch 4 oder 5, wobei die eine oder mehreren Teilregionen (22) und der ein oder mehrere Detektoren (60) zur Messung der einen oder mehreren mit den Höhen der einen oder mehreren Reaktionsproduktstränge (40) in Verbindungs tehenden Abstände in gegenseitiger räumlicher Ausrichtung liegen.

7. Verfahren nach einem der Ansprüche 1 - 6, wobei eine Mehrzahl katalysierter Gasphasen-Polymerisierungsreaktionen quantifiziert wird.

8. Vorrichtung (100) zur Quantifizierung eines Produktes einer oder mehrerer katalysierter Gasphasen-Polymerisierungsreaktionen, umfassend:
- Reaktionsträger (21), umfassend eine Reaktionsoberfläche (20) mit einer oder mehreren Teilregionen (22) zur Aufnahme der einen oder mehreren Polymerisierungsreaktionen und einen oder mehreren Reaktionsproduktstränge (40) daraus; wobei der Reaktionsträger (21) von der Vorrichtung (100) abnehmbar ist und zur abnehmbaren Einführung in eine Gasphasen-Polymerisierungsreaktion konfiguriert ist; und
- ein Abstandsmesssystem, das zur Messung eines oder mehrerer Abstände, die die Höhen der einen oder mehreren Reaktionsproduktstränge betreffen, konfiguriert ist.

9. Vorrichtung nach Anspruch 8, wobei:
- das Abstandsmesssystem einen oder mehrere Detektoren (60) umfasst und es sich beim einen oder mehreren Detektoren (60) um einen Ultraschall-, Infrarot-, Laser-Entfernungsmesser, Laserscanner, eine Kamera, einen Kraftsensor, eine Mehrzahl einer der vorgenannten Alternativen oder eine Kombination aus einer oder mehreren dieser Alternativen handelt.

10. Vorrichtung nach Anspruch 9, wobei die ein oder mehreren Detektoren (60) auf einer Detektortragefläche DSS (70) angeordnet sind, die parallel zur Reaktionsoberfläche (20) angeordnet ist und sich mit dieser überschneidet.

11. Vorrichtung nach Anspruch 9 oder 10, wobei die eine oder mehreren Teilregionen (22) und der ein oder mehrere Detektoren (60) zur Messung der einen oder mehreren mit den Höhen der einen oder mehreren Reaktionsproduktstränge (40) in Verbindungs tehenden Abstände in gegenseitiger räumlicher Ausrichtung liegen.

12. Vorrichtung (100) nach Anspruch 10 oder 11, wobei:
- das Abstandsmesssystem umfasst:
- einen oder mehrere Kraftsensoren (62), die am DSS (70) angeordnet sind, der parallel zur Reaktionsoberfläche (20) angeordnet ist und sich mit dieser überschneidet; und
- einen Abstandsindikator, der zur Messung von Veränderungen des Abstands zwischen DSS (70) und Reaktionsoberfläche (20) konfiguriert ist, und
- der Abstand zwischen DSS (70) und Reaktionsoberfläche (20) auf steuerbare Weise einstellbar ist.

13. Vorrichtung (100) nach einem der Ansprüche 8 - 12, die zur Quantifizierung einer Mehrzahl katalysierter Gasphasen-Polymerisierungsreaktionen konfiguriert ist.

## Revendications

1. Procédé de quantification du produit d'une ou plusieurs réactions de polymérisation en phase gazeuse catalysées comprenant :
- la conduite des une ou plusieurs réactions de polymérisation sur une ou plusieurs sous-régions (22) d'une surface de réaction (20) d'un élément de support de réaction (21) pour obtenir une ou plusieurs piles de produit de réaction de polymérisation (40), chacune étant disposée sur la surface de réaction (20),
- l'obtention d'une ou plusieurs mesures de distance associée aux hauteurs des une ou plusieurs piles de produit de réaction (40) ; et
- la détermination, à partir des une ou plusieurs mesures de distance, de la quantification des un ou plusieurs produits de réaction (40).

2. Procédé selon la revendication 1, dans lequel, avant d'obtenir les une ou plusieurs mesures de distance, l'élément de support de réaction (21) est retiré d'un réacteur de polymérisation en phase gazeuse dans lequel les une ou plusieurs réactions de polymérisation en phase gazeuse catalysées sont effectuées.

3. Procédé selon la revendication 1, dans lequel la conduite des une ou plusieurs réactions de polymérisation sur une ou plusieurs sous-régions (22) d'une surface de réaction (20) d'un élément de support de réaction (21) pour obtenir une ou plusieurs piles de produit de réaction de polymérisation (40) comprend les étapes de :
- distribution d'un ou plusieurs catalyseurs de polymérisation sur les une ou plusieurs sous-régions (22) de la surface de réaction (20) de l'élément de support de réaction (21) ;
- placement de l'élément de support de réaction dans un réacteur de polymérisation en phase gazeuse ;
- conduite de la réaction de polymérisation catalysée en phase gazeuse, pour former les une ou plusieurs piles de produit de réaction de polymérisation sur la surface de réaction (20) de l'élément de support de réaction (21) ; et
- retrait de l'élément de support de réaction (21) du réacteur de polymérisation en phase gazeuse, de manière à produire une ou plusieurs piles de produit de réaction de polymérisation sur une ou plusieurs sous-régions de la surface de réaction (20) de l'élément de support de réaction (21).

4. Procédé selon l'une quelconque des revendications 1 à 3, dans lequel les une ou plusieurs mesures de distance sont effectuées en utilisant un ou plusieurs détecteurs (60), et les un ou plusieurs détecteurs sont un télémètre à ultrasons, un télémètre à infrarouge, un télémètre à laser, un scanneur à laser, une caméra, un capteur de force, une pluralité d'un de ceux-ci, ou une combinaison d'un ou plusieurs de ceux-ci.

5. Procédé selon la revendication 4, dans lequel les un ou plusieurs détecteurs (60) sont disposés sur une surface de support de détecteur, DSS, (70) agencée parallèlement à, et chevauchant la surface de réaction (20).

6. Procédé selon la revendication 4 ou 5, dans lequel les une ou plusieurs sous-régions (22) et un ou plusieurs détecteurs (60) sont en alignement spatial mutuel pour la mesure des une ou plusieurs distances liées aux hauteurs des une ou plusieurs piles de produit de réaction (40).

7. Procédé selon l'une quelconque des revendications 1 à 6, dans lequel une pluralité de réactions de polymérisation en phase gazeuse catalysée sont quantifiées.

8. Dispositif (100) pour quantifier un produit d'une ou plusieurs réactions de polymérisation en phase gazeuse catalysées comprenant :
- un élément de support de réaction (21) comprenant une surface de réaction (20) ayant une ou plusieurs sous-régions (22) pour recevoir les une ou plusieurs réactions de polymérisation et une ou plusieurs piles de produit de réaction (40) de celles-ci ; dans lequel l'élément de support de réaction (21) est détachable du dispositif (100) et configuré pour insertion amovible dans une réaction de polymérisation en phase gazeuse ; et
- un système de mesure de distance configuré pour mesurer une ou plusieurs distances liées aux hauteurs des une ou plusieurs piles de produit de réaction.

9. Dispositif selon la revendication 8, dans lequel :
- le système de mesure de distance comprend un ou plusieurs détecteurs (60) ; et les un ou plusieurs détecteurs sont un télémètre à ultrasons, un télémètre à infrarouge, un télémètre à laser, un scanneur à laser, une caméra, un capteur de force, une pluralité d'un de ceux-ci, ou une combinaison d'un ou plusieurs de ceux-ci.

10. Dispositif selon la revendication 9, dans lequel les un ou plusieurs détecteurs (60) sont disposés sur une surface de support de détecteur, DSS, (70) agencée parallèlement à, et chevauchant la surface de réaction (20).

11. Dispositif selon la revendication 9 ou 10, dans lequel les une ou plusieurs sous-régions (22) et un ou plusieurs détecteurs (60) sont en alignement spatial mutuel pour la mesure des une ou plusieurs distances liées aux hauteurs des une ou plusieurs piles de produit de réaction (40).

12. Dispositif (100) selon la revendication 10 ou 11, dans lequel :
- le système de mesure de distance comprend :
- un ou plusieurs capteurs de force (62) disposés sur la DSS (70) qui est agencée parallèlement à, et chevauchant la surface de réaction (20) ; et
- un indicateur de distance configuré pour mesurer des changements de distance entre la DSS (70) et la surface de réaction (20) ; et
- la distance entre la DSS (70) et la surface de réaction (20) est ajustable de façon contrôlée.

13. Dispositif (100) selon l'une quelconque des revendications 8 à 12 configuré pour quantifier une pluralité de réactions de polymérisation en phase gazeuse catalysées.
